# EUROPÄISCHE PATENTANMELDUNG

(11) **EP 1 197 375 A2**
(43) Veröffentlichungstag der Anmeldung: **17.04.2002**
(21) Anmeldenummer: 01122706.3
(22) Anmeldetag: 21.09.2001
(51) Int. Cl.: B60K 20/00, F16H 61/26

(54) **Vorrichtung zum Schalten eines Stufengetriebes in einem Kraftfahrzeug**

(30) Priorität: 13.10.2000 DE 10050686
(71) Anmelder: Bayerische Motoren Werke Aktiengesellschaft, 80809 München (DE)
(72) Erfinder: Hoffmann-Loeber, Michael, Leamington Spa, CV32 6QG (GB)

(57) **Zusammenfassung**

Die Erfindung betrifft eine Vorrichtung zum Schalten eines Stufengetriebes in einem Kraftfahrzeug, umfassend einen Schaltarm (10), der an beiden Enden über Koppelelemente am Getriebegehäuse bzw. an der Karosserie des Fahrzeugs elastisch befestigt ist, einen Schalthebel, der über ein Kugelgelenk mit dem Schaltarm (10) verbunden ist, und eine Schaltstange, die an beiden Enden mit dem freien Ende des Schalthebels bzw. mit einer aus dem Getriebegehäuse herausragenden Schaltwelle (15) verbunden ist, wobei das dem Getriebegehäuse zugekehrte Ende des Schaltarms (10) näherungsweise in der Höhenlage der Schaltwelle angeordnet und über Bolzenlager mit horizontaler Achse abgestützt ist. Es ist ein zur Achse der Schaltwelle (15) symmetrischer Schaltarmadapter (14) vorgesehen, dessen beide Enden (17,18) gabelförmig ausgebildet sind. Ein die Schaltwelle (15) übergreifendes Ende (18) des Schaltarmadapters (14) ist mit dem Getriebegehäuse starr verbunden. Das andere Ende (17) des Schaltarmadapters übergreift den Schaltarm (10), und ein horizontaler Bolzen (13) durchsetzt das gegabelte Ende (17) des Schaltarmadapters (14) und eine Buchse des Schaltarms (10).

## Beschreibung

Die Erfindung betrifft eine Vorrichtung zum Schalten eines Stufengetriebes in einem Kraftfahrzeug, umfassend einen Schaltarm, der an beiden Enden über Koppelelemente am Getriebegehäuse bzw. an der Karosserie des Fahrzeugs elastisch befestigt ist, einen Schalthebel, der über ein Kugelgelenk mit dem Schaltarm verbunden ist, und eine Schaltstange, die an beiden Enden mit dem freien Ende des Schalthebels bzw. mit einer aus dem Getriebegehäuse herausragenden Schaltwelle verbunden ist, wobei das dem Getriebegehäuse zugekehrte Ende des Schaltarms näherungsweise in der Höhenlage der Schaltwelle angeordnet und über Bolzenlager mit horizontaler Achse abgestützt ist.

Bei einer solchen Vorrichtung dient der Schaltarm zur Abstützung bzw. Führung des Schalthebels. Da sich der Abstand zwischen den Befestigungspunkten des Schaltarms an der Karosserie des Fahrzeugs und dem Getriebe infolge von Schwingungen des mit dem Getriebe verblockten Motors ändern kann, sind elastische Koppelelemente erforderlich. Aus kinematischen Gründen ist eine parallele Anordnung von Schaltarm und Schaltstange vorteilhaft, weil dadurch eine kraftsparende axiale Verschiebung und/oder Verdrehung der Schaltstange ermöglicht wird. Eine solche parallele Anordnung von Schaltarm und Schaltstange würde aber bedeuten, daß das dem Getriebegehäuse zugekehrte Ende des Schaltarms im Abstand über der Schaltwelle angeordnet ist. Bei bestimmten Kraftfahrzeugtypen, insbesondere Personenwagen, ist eine derartige Anbindung des Schaltarms an das Getriebe aus Platzgründen nicht möglich. In diesen Fällen ist man daher gezwungen, das dem Getriebegehäuse zugekehrte Ende des Schaltarms näherungsweise in der Höhenlage der Schaltwelle anzuordnen. Zu diesem Zweck ist es bekannt, das dem Getriebegehäuse zugekehrte Ende des Schaltarms gabelförmig auszubilden und die beiden Gabeln über zwei horizontal fluchtende Bolzenlager mit dem Getriebegehäuse schwenkbar zu verbinden. Eine derartige Ausbildung des Schaltarms ist verhältnismäßig kompliziert, insbesondere wenn dieser als Gußteil ausgeführt wird. Es kommt noch hinzu, daß der Schaltarm an die jeweilige Baureihe, d.h. an den Abstand zwischen dem Getriebegehäuse und dem an der Karosserie vorgesehenen Lager für den Schaltarm angepaßt werden muß. Wegen der auf den Schalthebel übertragenen Vibrationen ist auch eine aufwendige Ausbildung der Schaltstange erforderlich, von der das Gelenk nicht demontiert werden kann. Die Schaltstange kann daher nicht kostengünstig hergestellt werden. Aufgrund zahlreicher Gummielemente in der gesamten Vorrichtung ergibt sich auch ein großes Quer- und Längsspiel, wodurch der Schaltkomfort verschlechtert wird. Zur Dämpfung der Vibrationen des Schalthebels muß der Schaltknopf eine große Masse aufweisen, was wegen des begrenzten Volumens den Einsatz teurer Materialien mit hohem spezifischem Gewicht erforderlich macht.

Der Erfindung liegt die Aufgabe zugrunde, die gattungsgemäße Vorrichtung hinsichtlich der Ausbildung des Schaltarm dahingehend weiterzubilden, daß der Schaltkomfort bei gleichzeitiger Verringerung der Herstellungskosten verbessert werden kann.

Erfindungsgemäß wird diese Aufgabe dadurch gelöst, daß ein zur Achse der Schaltwelle symmetrischer Schaltarmadapter vorgesehen ist, dessen beide Enden gabelförmig ausgebildet sind, daß ein die Schaltwelle übergreifendes Ende des Schaltarmadapters mit dem Getriebegehäuse starr verbunden ist, daß das andere Ende des Schaltarmadapters den Schaltarm übergreift, und daß ein horizontaler Bolzen das gegabelte Ende des Schaltarmadapters und eine Buchse des Schaltarms durchsetzt. Die für die eingangs erläuterte herkömmliche Schaltvorrichtung erforderlichen beiden Aufnahmepunkte am Getriebe können unverändert übernommen werden. Das entsprechende gabelförmige Ende des Schaltarmadapters kann an diesen Aufnahmepunkten am Getriebe mit diesem fest verschraubt oder anderweitig verbunden werden, so daß es sich nicht unabhängig vom Getriebe bewegen kann. Das andere gabelförmige Ende des Schaltarmadapters ist ähnlich ausgebildet wie die Verbindung eines herkömmlichen Schaltarms an einem über der Schaltwelle angeordneten Aufnahmepunkt am Getriebe. Die erfindungsgemäße Ausbildung der Schaltvorrichtung ermöglicht eine Verringerung der Anzahl der benötigten Gummielemente, was zu einem kleineren Quer- und Längsspiel und damit zu einem verbesserten Schaltkomfort führt. Wegen der Verringerung der Vibrationen des Schalthebels kann dessen Gewicht reduziert und die Ausbildung der Schaltstange vereinfacht werden. Zusätzlich zu der Verbesserung des Schaltkomforts wird daher eine Kostenersparnis erreicht.

Der Schaltarmadapter ist vorzugsweise ein an dem Getriebegehäuse starr befestigtes gesondertes Bauteil. Dies ermöglicht es, in verschiedenen Fahrzeugmodellen einen einheitlichen Schaltarm zu verwenden, wobei lediglich der Schaltarmadapter an die jeweiligen Abmessungen angepaßt werden muß. Um auf konstruktiv einfache Weise eine drehfeste Verbindung des Schaltarmadapters am Getriebegehäuse zu verwirklichen, ist vorgesehen, daß das eine gabelförmige Ende des Schaltarmadapters am Getriebegehäuse drehfest anliegt.

Ein bevorzugtes Ausführungsbeispiel der Erfindung ist in der Zeichnung dargestellt und wird nachfolgend näher erläutert. Es zeigt:
Fig. 1 eine Draufsicht auf einen Schaltarm und den damit gelenkig verbundenen Schaltarmadapter, und
Fig. 2 eine Seitenansicht des linken Endbereichs des Schaltarmadapters nach Fig. 1.

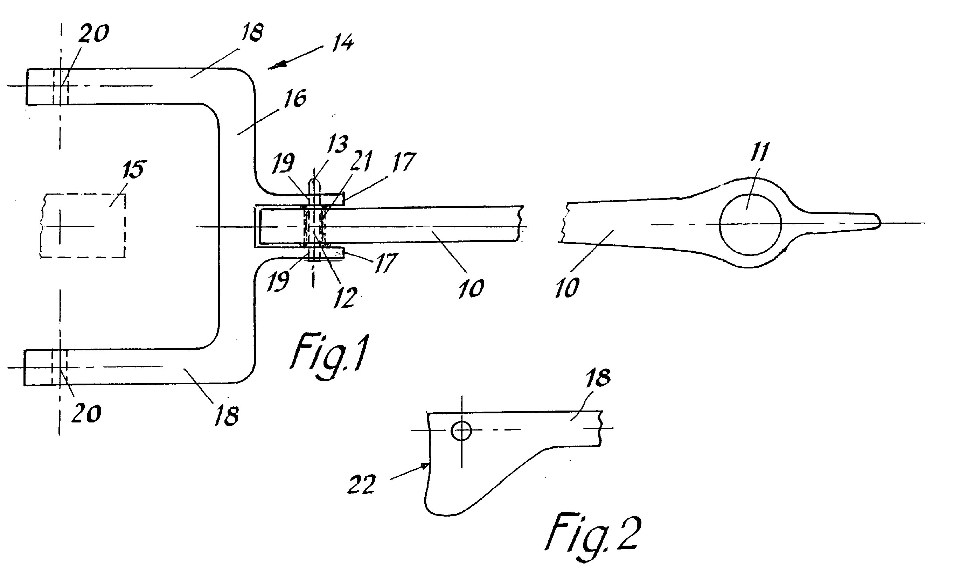

Der in Fig. 1 in der Draufsicht gezeigte Schaltarm 10 ist herkömmlich ausgebildet, d. h. er besitzt an einem Ende eine vertikale Öffnung 11 zur Aufnahme einer an dem (nicht gezeigten) Schalthebel angeordneten Gelenkkugel und am anderen Ende eine horizontale Öffnung 12 zur Aufnahme eines Lagerbolzens 13. Zur Verbindung des Schaltarms 12 mit einem (nicht gezeigten) Getriebegehäuse dient ein Schaltarmadapter 14. Die Längsachse des Schaltarms 10 ist in einer die Achse einer mit unterbrochenen Linien angedeuteten Schaltwelle 15 enthaltenden Vertikalebene angeordnet. Der Schaltarmadapter 14 ist zu dieser Vertikalebene symmetrisch ausgebildet und umfaßt zwei gabelförmige Enden. Bei der gezeigten Ausführungsform hat der Schaltarmadapter 14 einen Quersteg 16, von dem sich zwei Arme 17 in geringem Abstand nach hinten erstrecken und zwei Arme 18 in größerem Abstand nach vorne erstrecken. Die beiden hinteren Arme 17 und die beiden vorderen Arme 18 sind zur Längsachse des Schaltarms 10 bzw. der Schaltwelle 15 parallel. Die beiden hinteren Arme 17 sind mit Bohrungen 19 zur Aufnahme des Lagerbolzens 13 versehen, und die vorderen Arme 18 sind mit Bohrungen 20 zur Aufnahme von (nicht gezeigten) Schrauben zur starren Befestigung an einem mit entsprechenden Anlageflächen versehenen Bereich des Getriebegehäuses versehen. Wie aus Fig. 2 hervorgeht, haben die beiden vorderen Arme 18 ein besonderes Endprofil 22. Dieses Endprofil i22 st an die Form des Getriebegehäuses angepaßt, so daß sich der Schaltarmadapter 14 über die beiden vorderen Arme 18 drehfest abstützen kann.

Zur Montage wird der Schaltarm 10 mit einem an die jeweilige Baureihe eines Kraftfahrzeugs angepaßten Schaltarmadapter 14 gelenkig verbunden, indem der Lagerbolzen 13 in die miteinander fluchtenden Bohrungen 19 und 12 der beiden hinteren Arme 17 bzw. des Schaltarms 10 eingesetzt wird. Die im Schaltarm 10 angeordnete horizontale Bohrung 12 hat einen etwas größeren Durchmesser als der Lagerbolzen 13, so daß sie eine elastische Lagerhülse 21 aufnehmen kann. Sodann wird der Schaltarmadapter 14 an einem (nicht gezeigten) Teil des Getriebegehäuses starr befestigt, indem (nicht gezeigte) Schrauben oder ähnliche Befestigungselemente durch die Bohrungen 20 der vorderen Arme 18 hindurch in entsprechende Öffnungen des Getriebegehäuses eingesetzt werden. Selbstverständlich ist es auch möglich, zuerst den Schaltarmadapter 14 am Getriebegehäuse zu befestigen und anschließend mit dem Schaltarm 10 zu verbinden.

Wenn der Schaltarm 10 als Standardbauteil ausgeführt ist, dann müssen die Abmessungen des Schaltarmadapters 14 an das jeweilige Fahrzeugmodell, d. h. an den Abstand zwischen den im Getriebegehäuse ausgebildeten Befestigungsöffnungen für den Schaltarmadapter und dem in der Karosserie ausgebildeten Lager für den Schaltarm angepaßt sein. Es ist aber auch die umgekehrte Ausführung möglich, wobei der Schaltarmadapter als Standardbauteil zum entsprechenden Getriebe ausgeführt ist und der Schaltarm 14 an das jeweilige Fahrzeugmodell angepaßt ist. Bei beiden Ausführungsformen sind der Schaltarm 10 und der Schaltarmadapter 14 vorzugsweise als Gußbauteile aus Leichtmetall ausgeführt.

### Bezugszeichenliste:

- 10: Schaltarm
- 11: vertikale Öffnung
- 12: horizontale Öffnung
- 13: Lagerbolzen
- 14: Schaltarmadapter
- 15: Schaltwelle
- 16: Quersteg
- 17: hintere Arme
- 18: vordere Arme
- 19: Bohrungen in 17
- 20: Bohrungen in 18
- 21: Lagerhülse
- 22: Endprofil

## Patentansprüche

1. Vorrichtung zum Schalten eines Stufengetriebes in einem Kraftfahrzeug, umfassend einen Schaltarm, der an beiden Enden über Koppelelemente am Getriebegehäuse bzw. an der Karosserie des Fahrzeugs elastisch befestigt ist, einen Schalthebel, der über ein Kugelgelenk mit dem Schaltarm verbunden ist, und eine Schaltstange, die an beiden Enden mit dem freien Ende des Schalthebels bzw. mit einer aus dem Getriebegehäuse herausragenden Schaltwelle verbunden ist, wobei das dem Getriebegehäuse zugekehrte Ende des Schaltarms näherungsweise in der Höhenlage der Schaltwelle angeordnet und über Bolzenlager mit horizontaler Achse abgestützt ist, **dadurch gekennzeichnet, daß** ein zur Achse der Schaltwelle (15) symmetrischer Schaltarmadapter (14) vorgesehen ist, dessen beide Enden (17, 18) gabelförmig ausgebildet sind, daß ein die Schaltwelle (15) übergreifendes Ende (18) des Schaltarmadapters (14) mit dem Getriebegehäuse starr verbunden ist, daß das andere Ende (17) des Schaltarmadapters (14) den Schaltarm (10) übergreift, und daß ein horizontaler Bolzen (13) das gegabelte Ende (17) des Schaltarmadapters (14) und eine Buchse (12) des Schaltarms (10) durchsetzt.

2. Vorrichtung nach Anspruch 1, **dadurch gekennzeichnet, daß** der Schaltarmadapter (14) ein an dem Getriebegehäuse starr befestigtes gesondertes Bauteil ist.

3. Vorrichtung nach Anspruch 2, **dadurch gekennzeichnet, daß** das besagte eine gabelförmige Ende (18) des Schaltarmadapters (14) am Getriebegehäuse drehfest anliegt.
